Europäisches Patentamt

European Patent Office

Office européen des brevets

(19)

(11) Numéro de publication : **0 417 259 B1**

(12) ## FASCICULE DE BREVET EUROPEEN

(45) Date de publication du fascicule du brevet :
**03.11.93 Bulletin 93/44**

(51) Int. Cl.⁵ : **G01N 9/28**, G01F 23/16

(21) Numéro de dépôt : **90906242.4**

(22) Date de dépôt : **29.03.90**

(86) Numéro de dépôt international :
**PCT/FR90/00215**

(87) Numéro de publication internationale :
**WO 90/12307 18.10.90 Gazette 90/24**

(54) **DISPOSITIF DE MESURE IN SITU DE MASSE VOLUMIQUE ET DE NIVEAU D'UN LIQUIDE.**

(30) Priorité : **31.03.89 FR 8904276**

(43) Date de publication de la demande :
**20.03.91 Bulletin 91/12**

(45) Mention de la délivrance du brevet :
**03.11.93 Bulletin 93/44**

(84) Etats contractants désignés :
**DE FR GB**

(56) Documents cités :
**FR-A- 818 437**
**GB-A- 594 723**
**US-A- 1 519 609**
**US-A- 2 559 436**
**US-A- 3 453 891**
**US-A- 4 393 705**
**Soviet Inventions Illustrated, week K32, 21**
**September 1983, section 503, No.**
**83-734385/32, Derwent Publications Ltd, (Londres, GB), & Su, A, 966559 (KIEV AUTOMAT INST.) 15 October 1982**

(73) Titulaire : **COMMISSARIAT A L'ENERGIE ATOMIQUE**
**31-33, rue de la Fédération**
**F-75015 Paris (FR)**

(72) Inventeur : **NEUILLY, Michèle**
**2 A, place Général-de-Gaulle**
**F-13100 Aix-en-Provence (FR)**
Inventeur : **ORLOFF, Michel**
**174, avenue Marguerite-Renaudin**
**F-92140 Clamart (FR)**
Inventeur : **PLATZER, Roger**
**18, boulevard de la Liberté**
**F-92320 Châtillon (FR)**

(74) Mandataire : **Mongrédien, André et al**
**c/o BREVATOME 25, rue de Ponthieu**
**F-75008 Paris (FR)**

## Description

L'invention concerne la mesure de masse volumique ou de densité d'un liquide contenu dans un réservoir ou une cuve, et en particulier lorsqu'il s'agit de liquides agressifs, nucléaires, ou dangereux.

La mesure de tels liquides oblige à ne pas utiliser la méthode de l'échantillon prélevé, qui est toujours sujette à diverses sources d'erreurs, concernant notamment la température, le volume, le poids. Il est connu d'utiliser des capteurs de pression associés à des moyens d'acquisition électroniques pour effectuer cette mesure. On utilise alors la différence des pressions hydrostatiques existant entre deux niveaux du liquide à mesurer.

La mise en oeuvre d'une telle méthode utilise des tubes verticaux fixes appelés "cannes de bullage".

On appelle bullage la formation commandée d'au moins une bulle à l'extrémité inférieure d'un tube immergé.

Pour effectuer la mesure, ces tubes verticaux sont plongés dans le liquide et positionnés de telle manière que l'on connaisse la distance verticale entre les deux extrémités inférieures des deux tubes. Il est également préférable de connaître les températures correspondantes du liquide à ces deux niveaux différents. Le processus de la mesure est le suivant. Les deux tubes sont plongés verticalement dans le liquide à mesurer et immobilisés verticalement. Il est important que leurs extrémités immergées soient identiques aussi bien en nature du matériau qu'en géométrie (diamètres intérieur ou extérieur, forme des lèvres). Du gaz est insufflé dans chacun des tubes jusqu'à l'apparition de la surface de séparation entre le gaz et le liquide, appelée ménisque gaz-liquide à l'extrémité de chacun des deux tubes. L'apparition de ce ménisque à l'extrémité de chacun des tubes se poursuit par l'apparition d'une bulle. La mesure de pression est effectuée à un moment déterminé de la formation de chaque bulle.

Le calcul de la masse volumique du liquide est basé sur la formule (I) donnant la pression hydrostatique d'un liquide en fonction de la hauteur H du liquide, de sa masse volumique et de l'accélération g de la pesanteur du lieu où s'effectuent les mesures.

Formule (I)

$$P = H.\rho.g$$

On rappelle que, pour obtenir la densité d du liquide, il faut effectuer le rapport $\rho / \rho_0$ de la masse volumique $\rho$ du liquide sur la masse volumique de l'eau $\rho_0$, en indiquant la température à laquelle chacune de ces masses volumiques est mesurée.

Si $H_A$ et $H_B$ sont respectivement les distances verticales entre les extrémités respectives des deux cannes et la surface libre du liquide, si $P_A$ et $P_B$ sont les deux pressions régnant dans le liquide aux deux profondeurs d'immersion $H_A$ et $H_B$, la formule (I), appliquée aux extrémités des cannes prend les deux expressions suivantes :

Formule (II) :

$$P_A = H_A . \rho.g$$

Formule (III) :

$$P_B = H_B. \rho.g$$

Si on mesure les pressions $P_A$ et $P_B$ par la technique de bullage à l'aide de ces deux cannes, il convient d'une part de tenir compte de la masse volumique du gaz, car théoriquement :

Formule (IV) :

$$\rho \text{ mesuré} = \rho - gaz$$

et d'autre part, qu'il existe une petite différence de pression dP entre les deux faces du ménisque, due aux forces de tension superficielle du liquide et à la petite différence de hauteur dH au niveau de la bulle. La théorie montre et l'expérience confirme que dP est indépendante de P. Autrement dit, dP a la même valeur pour des niveaux d'immersion A et B différents. Donc, $dP_A$ est égale à $dP_B$ et ainsi leur valeur s'annule par soustraction (sous réserve que les extrémités des cannes soient identiques).

Si on combine par soustraction les formules (II) et (III), on obtient la formule (V) suivante :

Formule (V) :

$$P_A - P_B = (H_A - H_B) (\rho - \rho gaz)$$

Sous une autre forme cette formule devient :

Formule (VI) :

$$\rho = [(P_A - P_B)/(H_A - H_B)g] + \rho gaz$$

Connaissant la masse volumique $\rho_{gaz}$ du gaz, par la mesure les deux pressions $P_A$ et $P_B$, et par la construction de l'appareil de mesure, $\Delta H = H_A - H_B$ qui est la distance entre les deux extrémités des cannes de bullage et connaissant g, on déduit la valeur de la masse volumique $\rho$ du liquide à mesurer. Si la connaissance de $\Delta H$ par construction n'est pas acquise, ou avec une précision insuffisante, on peut favorablement l'obtenir par étalonnage avec un liquide de masse volumique connue, l'eau très pure de température connue étant le liquide préféré.

En prolongeant l'insufflation du gaz, une bulle se forme à l'extrémité de chaque canne. Elle augmente de volume, puis se détache de l'extrémité de la canne. Le début de l'augmentation du volume de cette bulle ne peut avoir lieu qu'avec une plus forte augmentation de pression de gaz. Ensuite, la pression passe par un maximum durant l'augmentation du volume de la bulle qui se déforme principalement latéralement, et finit par se détacher de la canne. Il est à noter que ce phénomène de formation de la bulle à l'extrémité d'un tube, ainsi que la pression maximale de formation de cette bulle sont indépendants de la profondeur d'immersion du tube, mais ne dépendent que du diamètre de ce tube et de la nature du liquide.

Plusieurs contraintes accompagnent cette méthode et ce dispositif ; elles sont les suivantes.

Le bullage n'étant pas synchrone d'un tube à l'autre, les mesures ne peuvent être simultanées qu'en utilisant deux manomètres différents.

La structure géométrique du dispositif doit être rigide pour que le positionnement relatif des deux tubes soit fixe. En effet, ils doivent être parfaitement verticaux. Les formules précédentes ne sont utilisables que si les seules forces mises en jeu sont d'origine gravitaire. En conséquence, les mesures ne peuvent être effectuées que dans un liquide parfaitement calme.

Selon les liquides mesurés, les extrémités de chaque tube peuvent faire l'objet de dépôts, d'encrassements, ou de diverses cristallisations de matière, changeant ainsi le diamètre de l'extrémité ; il est en général très difficile de nettoyer les extrémités des cannes si ces dernières ne sont pas démontables. La corrosion peut également influer sur la géométrie des tubes, en particulier sur la longueur, ce qui oblige à effectuer un nouvel étalonnage avant chaque mesure pour ne pas donner de résultats erronés.

La mise en oeuvre de ce dispositif fait que ceux-ci sont généralement positionnés de manière fixe. Ceci a pour conséquence que, pour effectuer des mesures de densité à des différents niveaux, il est impératif de disposer d'un grand nombre de tubes.

Le but de l'invention est de remédier à ces contraintes en proposant un système de mesure de masse volumique par bullage de conception différente et pouvant être mobile.

A cet effet, l'objet de l'invention est un dispositif de mesure de la masse volumique et du niveau en un point quelconque d'un liquide par mesure différentielle de pressions du type "bullage" d'au moins deux tubes à au moins deux niveaux différents du liquide situés l'un par rapport à l'autre de façon connue et comprenant :

- un premier tube de bullage possédant une première extrémité supérieure et une deuxième extrémité inférieure terminée par des premières lèvres de bullage positionnées au premier niveau de mesure ;
- un deuxième tube de bullage possédant une première extrémité supérieure et une deuxième extrémité inférieure terminée par des deuxièmes lèvres de bullage positionnées au deuxième niveau de mesure ;
- une source contrôlée et modulée de gaz sous pression reliée de façon étanche aux deux premières extrémités supérieures des deux tubes de bullage et munie de moyens de détection de pressions pour mesurer les deux pressions maximales de bullage respectives aux deux niveaux de mesure ; et
- des moyens de calcul de la masse volumique du liquide sur la base des deux pressions maximales de bullage mesurées.

Le dispositif selon l'invention est agencé de sorte que les deuxièmes extrémités inférieures des premier et deuxième tubes de bullage sont reliées par un tube de prélèvement comprenant un unique orifice de prélèvement du liquide, de manière à ce que le liquide utilisé pour les deux mesures au deux niveaux de mesure soit le même, de façon à ce que les deux mesures soient effectuées dans des conditions similaires et sans les perturbations créées par les éventuels remous du liquide.

Dans une première réalisation du dispositif selon l'invention, le deuxième tube de bullage est placé sous le premier tube de bullage et constitue le tube de prélèvement, la deuxième extrémité inférieure du premier tube de bullage étant reliée de façon étanche à la première extrémité supérieure du deuxième tube de bullage, de manière à faire pénétrer le gaz sous pression dans le deuxième tube de bullage, après que le bullage du premier tube ait eu lieu.

Le dispositif selon l'invention se présente donc ainsi sous la forme d'une seule canne qui peut être mobile dans le liquide et dont la structure est rigide. Elle permet également de n'être reliée qu'à une seule source de pression et de n'utiliser qu'un seul instrument de mesure.

Dans une deuxième réalisation du dispositif selon l'invention, dans laquelle les deux cannes de bullage sont parallèles, mais de longueurs différentes, le tube de prélèvement est constitué de deux raccords fixés chacun à l'extrémité inférieure d'un des deux tubes de bullage et se rejoignant pour former un tube commun se terminant par l'orifice de prélèvement. Cette version permet un gain de temps car les bullages peuvent se produire simultanément, ce qui évite des erreurs de niveau ou de pression ambiante entre les deux niveaux et l'influence du temps sur les paramètres de mesure en général.

Selon un mode préférentiel de réalisation, le dispositif comprend un troisième tube de bullage, relié de manière étanche, placé sous le deuxième tube de bullage ou sous le tube de prélèvement et comportant une deuxième extrémité inférieure terminée par des troisièmes lèvres de bullage positionnées à un troisième niveau déterminé de mesure, de façon fixe en hauteur par rapport aux deux premiers niveaux de mesure. Dans ce cas, les moyens de détection de bullage peuvent détecter la pression de bullage au troisième niveau des troisièmes lèvres de bullage. On prévoit dans ce cas des moyens de calcul de la hauteur du troisième niveau par rapport à la surface libre du liquide à partir de la mesure de la troisième pression détectée de bullage des troisièmes lèvres de bullage, après le calcul de la masse volumique du liquide pour calculer la masse volumique du gaz et corriger la valeur obtenue de la masse volumique du liquide.

Il est également prévu des moyens de mesure de la température dans l'extrémité inférieure d'un des tubes de bullage. Ceci permet de corriger l'influence de la température sur les mesures de pression, pour exprimer la valeur de la masse volumique à une température donnée servant de référence.

Le troisième tube de bullage peut être constitué d'un corps de masse importante, afin de constituer un lest pour le dispositif.

Il est prévu d'utiliser un tube de protection perforé placé dans le prolongement du troisième tube de bullage pour protéger les troisièmes lèvres de ce troisième tube de bullage.

L'invention et ses différentes caractéristiques seront mieux comprises à la lecture de la description qui suit, et qui est accompagnée des deux figures représentant en coupe le dispositif de mesure selon l'invention, immergé dans un liquide dans deux réalisations différentes.

Le dispositif selon l'invention utilise le même principe de bullage que celui énoncé dans le préambule de la présente description. Plus précisément, il effectue des mesures de pressions à des profondeurs différentes dans le liquide à mesurer. La différence des deux pressions mesurées donne, à l'aide de l'accélération de la pesanteur et de la différence de profondeur des deux niveaux où les mesures sont effectuées, la masse volumique du liquide.

Le dispositif comprend principalement un premier tube de bullage 10, un deuxième tube de bullage 20, une source contrôlée et modulée 40 de gaz sous pression et des moyens de calcul 50 de la masse volumique du liquide.

Le concept de l'invention est de relier à un seul orifice de prélèvement de liquide les endroits des deux tubes de bullage 10 et 20 où s'effectuent les deux mesures.

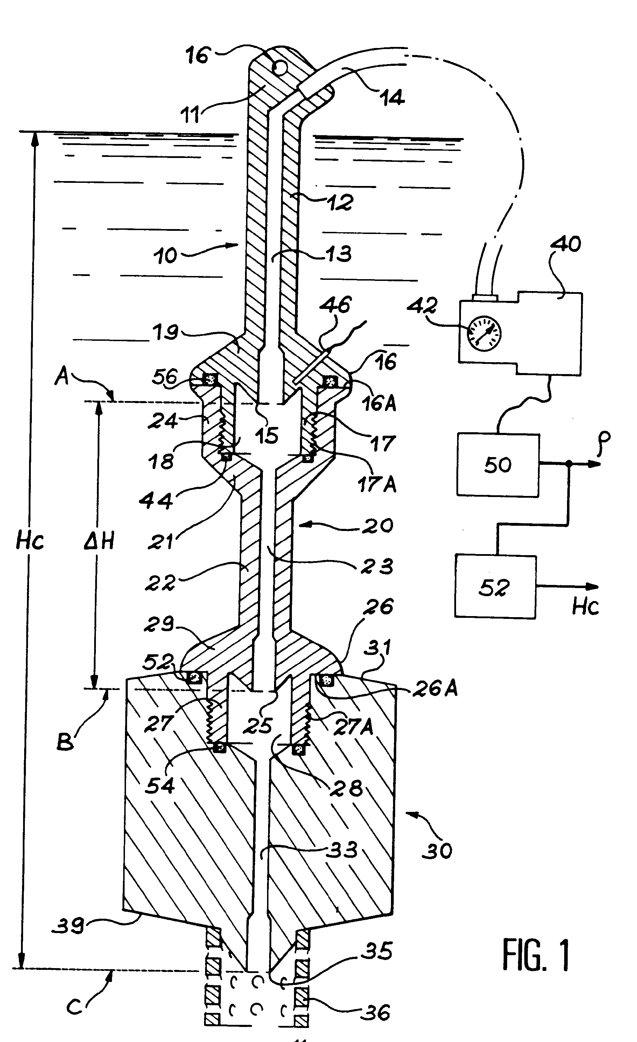

Dans la première réalisation représentée par la figure 1, cette liaison des deux endroits de mesure est assurée par le deuxième tube de bullage 20 placé en dessous, à la verticale, du premier tube de bullage 10.

Le premier tube de bullage 10 est constitué d'un corps tubulaire 12 rigide, de préférence métallique, à l'intérieur duquel se trouve un canal 13. Ce corps tubulaire 12 se termine par une première extrémité supérieure 11. Celle-ci possède une entrée du gaz sous pression 14 en communication avec le canal 13 du corps tubulaire 12. Elle est également munie de moyens d'accrochage 16, destinés à suspendre, non seulement le premier tube de bullage 10, mais le dispositif entier. Ces moyens d'accrochage peuvent être constitués simplement d'un trou 16 ou d'un crochet de suspension. Sur la figure, l'entrée du gaz 14 a été représentée de côté. Cette réalisation n'est qu'un exemple, d'autres positions de cette entrée du gaz 14 pouvant être réalisées sans changer le fonctionnement du dispositif et sans influencer les résultats de la mesure.

Le corps tubulaire 12 se termine par une deuxième extrémité inférieure 19. Celle-ci termine le canal 13 du corps tubulaire 12 par des premières lèvres 15, ces dernières affectant la forme d'un angle aigu. Elles sont destinées à effectuer le bullage au premier niveau A. Cette extrémité inférieure 19 se termine par un manchon de fixation 17, de diamètre interne supérieur à celui du canal 13. Compte tenu de la forme des premières lèvres 15 en angle aigu, ce manchon 17 délimite une cavité 18 entourant l'extrémité des lèvres 15. Cette cavité 18 est destinée à permettre la formation et le grossissement de la bulle au moment précis de la mesure. Légèrement au-dessus du manchon 17, l'extrémité inférieure 19 affecte une forme plus large 16 constituant une butée vis-à-vis du deuxième tube de bullage 20. Cette butée 16 a une surface radiale 16A munie d'une rainure circulaire à l'intérieur de laquelle est logé un joint torique d'étanchéité 56. L'extrémité inférieure 19 est destinée également à recevoir l'extrémité supérieure 21 du deuxième tube de bullage. La fixation entre ces deux éléments se fait à l'aide d'un filetage 17A usiné sur le diamètre externe du manchon 17 de l'extrémité inférieure du premier tube de bullage 10, et par un taraudage correspondant usiné à l'intérieur de l'extrémité supérieure 21 du deuxième tube de bullage 20.

En correspondance avec l'extrémité inférieure 19 du premier tube de bullage 10, l'extrémité supérieure 21 du deuxième tube de bullage 20 affecte la forme d'un manchon taraudé 24 pouvant se visser autour du manchon de fixation 17 du premier tube de bullage. Ce manchon taraudé 24 se termine par une surface radiale correspondant à la surface radiale 16A de la butée 16 de l'extrémité inférieure 19 du premier tube de bullage 10. La fin de la partie taraudée du manchon taraudé 24 se termine par un logement torique à l'intérieur duquel est placé un deuxième joint torique 44 pour assurer l'étanchéité au niveau de la cavité 18. Cette dernière est terminée par l'extrémité supérieure 21 du deuxième tube de bullage 20 qui se rétrécit et est fixée à un corps tubulaire 22 à l'intérieur duquel se trouve un canal 23. De manière analogue au premier tube de bullage 10, le deuxième tube de bullage 20 est rigide et est de préférence métallique. Une extrémité inférieure 29 termine le canal 23 avec les deuxièmes lèvres 25. Ces dernières sont destinées à effectuer le bullage au deuxième niveau B.

La source contrôlée et modulée 40 de gaz sous pression est équipée de moyens de détection de pressions de bullage 42. Ces derniers détectent et enregistrent les valeurs de pressions $P_A$ et $P_B$ qui sont effectuées par le dispositif, aux deux niveaux différents de mesures A et B. Des moyens de calculs 50 de la masse volumique sont connectés à la sortie des moyens de détection de pressions 42 pour déduire la masse volumique du liquide à l'aide de la formule (VI), utilisant les deux pressions mesurées $P_A$ et $P_B$.

L'utilisation et le fonctionnement du dispositif selon cette première réalisation de l'invention sont les suivants. Le dispositif de mesure, sous la forme d'une canne monobloc, est descendu dans le liquide, dont on doit mesurer la masse volumique, ceci jusqu'à une certaine profondeur au niveau choisi pour la mesure. On module la pression du gaz de la source 40 dans les tubes 13 et 23 par l'intermédiaire de l'entrée de gaz 14, on chasse le liquide qui a pu s'introduire dans les tubes 13 et 23 au cours de la descente du dispositif puis, en diminuant cette pression de gaz, le liquide est aspiré dans les canaux centraux 23 et 13, de manière à les remplir complètement. Le gaz sous pression est ensuite insufflé, par l'intermédiaire de l'entrée de gaz 14 du premier tube de bullage 10. Sous l'effet de l'augmentation progressive de pression, au moyen de la source contrôlée 40 de gaz sous pression, le ménisque gaz-liquide descend jusqu'aux premières lèvres 15 de l'extrémité inférieure 19 du premier tube de bullage 10. En pénétrant dans la première cavité 18, le ménisque prend une forme bombée en augmentant sa surface.

Il se forme alors une bulle qui grossit. Son augmentation de volume nécessite une augmentation de pression plus importante. La forme de la bulle est également tributaire du diamètre du canal central 13 au niveau des premières lèvres 15. La pression hydrostatique dans un fluide augmentant avec la profondeur, la pression croît au fur et à mesure de la croissance de la bulle. Puis elle passe par un maximum un peu avant que la bulle ne se décroche naturellement de la canne lorsque son volume devient suffisant pour que la poussée d'Archimède s'exerçant sur la bulle devienne suffisante pour la décrocher.

Les moyens de détection de bullage 42 détectent alors une baisse brutale de la pression et enregistrent la valeur maximale $P_A$ de la pression maximale obtenue lors de la formation de cette première bulle.

La source contrôlée 40 de gaz sous pression continue à fournir une pression croissante. Le gaz pénètre donc dans toute la cavité 18 du premier tube de bullage 10, pour pénétrer ensuite dans le canal central 23 du deuxième tube de bullage 20. Le ménisque gaz-eau atteint de ce fait l'extrémité inférieure 29 du deuxième tube de bullage 20 et les deuxièmes lèvres 25 à la limite de la cavité 28 du deuxième tube de bullage 20. L'obtention de la pression de bullage $P_B$ au niveau B se fait de manière analogue à celle de la pression $P_A$ au niveau A qui vient d'être décrite.

Un avantage important du dispositif selon l'invention est que ce dernier n'utilise qu'une seule source contrôlée 40 pour fournir le gaz sous pression et un seul moyen de détection de bullage 42, en l'occurrence un manomètre de précision.

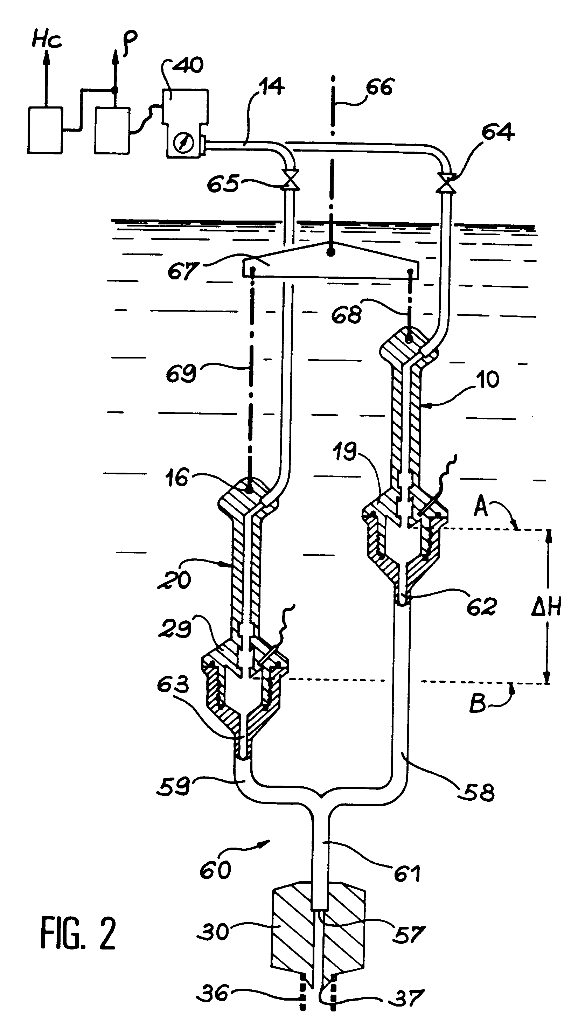

Dans la deuxième réalisation du dispositif selon l'invention représenté par la figure 2, la liaison entre les deux endroits de mesure est assurée par un tube de prélèvement 60. Ce dernier est composé de deux tubes de raccord 58 et 59, dont les premières extrémités respectives 62 et 63 sont reliées chacune aux extrémités inférieures 29 et 19 des premier et deuxième tubes de bullage 10 et 20. Ces deux raccords 58 et 59 se rejoignent pour former un tube de prélèvement 61 se terminant par un orifice unique de prélèvement 57. Les liaisons des raccords 58 et 59 du tube de prélèvement 60 avec les deux tubes de bullage 10 et 20 se font de la même manière que celle décrite sur la figure 1 relative à la première réalisation du dispositif selon l'invention.

Les longueurs respectives des deux raccords 58 et 59 et du tube de prélèvement 61, de même que leur forme, peuvent être quelconques. En effet, la seule contrainte de forme de ce tube de prélèvement est que les extrémités inférieures 19 et 29 des deux tubes de bullage 10 et 20 soient chacune suffisamment éloignée de l'orifice de prélèvement 57, de manière à être protégée de n'importe quel mouvement ou remous du fluide dans lequel le dispositif est plongé.

Dans cette deuxième réalisation, l'entrée de gaz sous pression 14 se divise en deux pour alimenter les deux tubes de bullage 10 et 20, par l'intermédiaire de deux vannes 64 et 65.

L'ensemble de cette deuxième réalisation ne se présente plus sous la forme d'une seule canne. Elle nécessite donc quelques accessoires pour permettre sa descente dans le liquide où doivent être effectuées les mesures. Ces accessoires peuvent, à titre d'exemple, être constitués d'une corde de descente 66 à l'extrémité inférieure de laquelle est fixée une barre 67. A cette dernière peuvent être suspendues deux cordes de soutien 68 et 69 auxquelles sont respectivement attachés les deux tubes de bullage 10 et 20. On peut à cet effet utiliser des systèmes d'accrochage analogues à ceux évoqués pour la première réalisation, à savoir un crochet 16.

Les deux vannes 64 et 65 permettent d'envoyer l'air sous pression dans les deux tubes de bullage 10 et 20 à des moments différents. Ceci constitue un avantage par rapport au premier dispositif. En effet, les plans de mesure A et B étant à des niveaux différents, le parcours que doit effectuer l'air pour atteindre ces deux endroits est différent pour les deux tubes de mesure 10 et 20. Dans le but d'effectuer les deux mesures de façon simultanée, il se trouve avantageux d'envoyer l'air sous pression au préalable dans le tube de bullage placé le plus bas, en l'occurrence le deuxième tube de bullage 20. La pression est ensuite envoyée dans le premier 20. La pression est ensuite envoyée dans le premier tube de bullage 10 de manière à ce que les deux interfaces dans les deux tubes de bullage 10 et 20 atteignent les lèvres 15 et 25 à des instants relativement rapprochés.

Ceux-ci permettent de gagner du temps lors des différentes mesures et d'effectuer ces dernières sans influence des différents paramètres de mesure pouvant varier en fonction du temps.

Le dispositif dans sa conception est simple, et donc d'une utilisation très aisée. Un autre avantage est qu'il n'est pas nécessaire que le liquide soit rigoureusement calme, les zones de "bullage" étant protégées. Il est portable et démontable, ce qui entraîne une possibilité de facile décontamination, et d'élimination d'éventuels dépôts sur les lèvres. En fonction du manomètre utilisé, le dispositif peut être très précis.

La mesure de pression hydrostatique, en un niveau déterminé d'une cuve de liquide, permet de mesurer la distance verticale qui sépare ledit niveau avec la surface du liquide. A cet effet, dans sa première réalisation, le dispositif selon l'invention comprend un troisième tube de bullage 30 placé sous le deuxième tube de bullage 29, de manière analogue au positionnement de ce deuxième tube de bullage 20 par rapport au premier 10. Dans ce cas, l'extrémité inférieure 29 du deuxième tube de bullage 20 est équipée de manière identique à l'extrémité inférieure 19 du premier tube de bullage, d'une partie large 26. Celle-ci sert de butée au troisième tube de bullage 30, par l'intermédiaire d'une surface radiale 26A. En regard de cette surface radiale 26A, le troisième tube de bullage 30 possède une rainure torique dans laquelle est placé un troisième joint torique 52, assurant l'étanchéité entre le deuxième tube de bullage 20 et le troisième 30. L'extrémité inférieure 29 du deuxième tube de bullage 20 possède un manchon de fixation 27, de diamètre interne plus large que le diamètre du canal central 23, de manière à délimiter une cavité 28 analogue à la cavité 18 se trouvant entre le premier tube de bullage 10 et le deuxième 20. De même, un quatrième joint torique 54 peut être placé au bout de ce manchon de fixation 27. Ce dernier possède un filetage externe 27A pour que le troisième tube de bullage 30 vienne se visser autour de lui. Ce troisième tube de bullage 30 possède également un canal central 33, analogue aux précédents 23 et 13, et une extrémité inférieure 39 terminant le canal central 33 par des lèvres 35 ayant les mêmes formes que les lèvres précédentes 25 et 15. La longueur du canal 33 doit être suffisante (par exemple six à huit fois son diamètre) pour éviter que d'éventuels mouvements du liquide à l'extérieur du dispositif perturbent les conditions de mesure de la pression $P_B$ par les deuxièmes lèvres 25.

Le troisième tube de bullage 30 a été représenté massif car il peut constituer avantageusement un lest pour l'ensemble du dispositif de mesure. Il peut également comporter un tube perforé 36 pour la protection des troisièmes lèvres 35. En effet, le dispositif étant portable, les troisièmes lèvres 35 se trouvent à l'extrême limite inférieure du dispositif et sont donc exposées à d'éventuels chocs ou contacts durant la manipulation du dispositif de mesure.

Ce troisième tube de bullage 30 peut également équiper la deuxième réalisation du dispositif selon l'invention. Dans ce cas, il est fixé à l'orifice de prélèvement 57 du tube de prélèvement 60.

L'utilisation de ce troisième tube de bullage 30 est le suivant. Connaissant la masse volumique du liquide, après avoir effectué les deux bullages aux niveaux A et B, il est possible de connaître la position du niveau C des troisièmes lèvres 35. En effet, en appliquant la formule (I) au niveau C, soit $P_C = H_C.\rho.g$. $P_C$ étant mesuré par le dispositif de mesure, la hauteur $H_C$ peut être déduite à l'aide de la formule (VII) suivante : $H_C = P_C/\rho g$, en négligeant la masse volumique du gaz et la surpression $dP_C$ de formation de la bulle.

Des moyens de calcul 52 de cette hauteur $H_C$ sont donc utilisés à la sortie des moyens de calcul 50 de la masse volumique $\rho$ du liquide.

Il est possible d'équiper le dispositif de mesure selon l'invention de moyens de mesure de la température du liquide. Ceci peut être obtenu en incorporant dans une extrémité inférieure, en l'occurrence 19, une sonde de température 46. Ceci permet de corriger les valeurs calculées de masse volumique au cas où la température du liquide varie dans le temps. Il est également possible de disposer d'une sonde de température à chaque extrémité inférieure de chaque tube de bullage pour relever les éventuelles différences de température aux différents niveaux de mesure A, B et C.

## Revendications

1. Dispositif de mesure de la masse volumique et du niveau en un point quelconque d'un liquide par mesure différentielle de pressions du type "bullage" avec au moins deux tubes (10, 20) à au moins deux niveaux différents (A, B) du liquide situés l'un par rapport à l'autre de façon connue, comprenant :

  - un premier tube de bullage (10) possédant une première extrémité supérieure (11) et une deuxième extrémité inférieure (19) terminée par des premières lèvres de bullage (15) positionnées au premier niveau de mesure (A) ;
  - un deuxième tube de bullage (20) possédant une première extrémité supérieure (21) et une deuxième extrémité inférieure (29) terminée par des deuxièmes lèvres de bullage (25) positionnées au deuxième niveau de mesure (B) ;
  - une source contrôlée et modulée (40) de gaz sous pression, reliée de façon étanche aux deux premières extrémités supérieures (11, 21) des deux tubes de bullage (10, 20) et munie de moyens de détection de pressions (42) pour mesurer les deux pressions respectives maximales de bullage ($P_A$, $P_B$) aux deux niveaux différents (A, B) ; et
- des moyens de calcul (50) de la masse volumique du liquide sur la base des deux pressions maximales de bullage ($P_A$, $P_B$) détectées,

caractérisé en ce que les deuxièmes extrémités inférieures (19, 29) des premier et deuxième tubes de bullage (10, 20) sont reliées par un tube de prélèvement comprenant un unique orifice de prélèvement du liquide, de manière à ce que le liquide utilisé pour les deux mesures aux deux niveaux de mesure (A, B) soit le même pour que les deux mesures soient effectuées dans des conditions similaires et sans les perturbations créées par les éventuels remous du liquide.

2. Dispositif de mesure selon la revendication 1, caractérisé en ce que le tube de prélèvement est constitué par le deuxième tube de bullage (20) placé sous le premier tube de bullage (10), la deuxième extrémité inférieure (19) du premier tube de bullage (10) étant reliée de façon étanche à la première extrémité supérieure (21) du deuxième tube de bullage (20), de manière à faire pénétrer le gaz sous pression dans le deuxième tube de bullage (20) après que le premier bullage du premier tube (10) ait eu lieu.

3. Dispositif de mesure selon la revendication 2, caractérisé en ce qu'un troisième tube de bullage (30) est placé sous le deuxième tube de bullage (20) et est relié de manière étanche par une première extrémité supérieure (31) à la deuxième extrémité inférieure (29) du deuxième tube de bullage (20) et comportant une deuxième extrémité inférieure (39) terminée par des troisièmes lèvres de bullage (35) positionnées à un troisième niveau déterminé (C) de façon fixe par rapport aux deux premiers niveaux (A, B), les moyens de détection de pressions de bullage (42) pouvant détecter la troisième pression de bullage ($P_C$) au troisième niveau (C) des troisièmes lèvres de bullages (35) ;
- des moyens de calcul de la hauteur ($H_C$) du troisième niveau (C) par rapport à la surface du liquide à partir de la mesure de la troisième pression détectée ($P_C$) des troisièmes lèvres de bullage (35) après le calcul de la masse volumique du liquide, pour calculer la masse volumique du gaz utilisé et corriger la valeur obtenue de la masse volumique du liquide.

4. Dispositif selon la revendication 1, les deux cannes de bullage (10, 20) étant parallèles, mais de longueurs différentes, caractérisé en ce que le tube de prélèvement (60) est constitué par deux raccords (58, 59) fixés chacun à l'extrémité inférieure (19, 29) d'un des deux tubes de bullage (10, 20) et se rejoignant pour former un tube commun (61) se terminant par l'orifice de prélèvement (57).

5. Dispositif de mesure selon la revendication 4, caractérisé en ce qu'un troisième tube de bullage (30) est placé sous le tube de prélèvement (60) et est relié de manière étanche par une première extrémité supérieure (31) à l'orifice de prélèvement (57) du tube de prélèvement (60) et comportant une deuxième extrémité inférieure (39) terminée par des troisièmes lèvres de bullage (35) positionnées à un troisième niveau déterminé (C) de façon fixe par rapport aux deux premiers niveaux (A, B), les moyens de détection de pressions de bullage (42) pouvant détecter la troisième pression de bullage ($P_C$) au troisième niveau (C) des troisièmes lèvres de bullage (35) ;
- des moyens de calcul de la hauteur ($H_C$) du troisième niveau (C) par rapport à la surface du liquide à partir de la mesure de la troisième pression détectée ($P_C$) des troisièmes lèvres de bullage (35) après le calcul de la masse volumique du liquide, pour calculer la masse volumique du gaz utilisé et corriger la valeur obtenue de la masse volumique du liquide.

6. Dispositif de mesure selon les revendications précédentes, caractérisé en ce qu'il comprend des moyens de mesure de la température (46) placés dans l'extrémité inférieure (19) d'au moins un des tubes de bullage (10).

7. Dispositif de mesure selon la revendication 3 ou 5, caractérisé en ce que le troisième tube de bullage (30) est un corps de masse importante pour constituer un lest pour le dispositif de mesure.

8. Dispositif de mesure selon la revendication 3, 5 ou 7, caractérisé en ce qu'un tube de protection perforé (36) est placé dans le prolongement du troisième tube de bullage (30) pour protéger les troisièmes lèvres (35) du troisième tube de bullage (30).

9. Dispositif de mesure selon la revendication 3, 5 ou 7, caractérisé en ce que le troisième tube (33) est de longueur suffisante pour protéger la zone de bullage au niveau des lèvres (25) d'éventuels mouvements du liquide autour du dispositif de mesure.

**Patentansprüche**

1. Vorrichtung zur Messung der Dichte und des Pegels einer Flüssigkeit an einer beliebigen Stelle durch Differentialdruckmessung des Typs "Blasenbildung" mit wenigstens zwei Rohren (10, 20) auf wenigstens zwei unterschiedlichen Flüssigkeitsniveaus (A, B), wovon die Lage des einen, bezogen auf das andere, bekannt ist, enthaltend:
   - ein erstes Blasenbildungsrohr (10), das ein erstes, oberes Ende (11) aufweist, und ein zweites, unteres Ende, das in ersten Blasenbildungslippen (15) endet, auf dem ersten Meßniveau (A) befindlich;
   - ein zweites Blasenbildungsrohr (20) mit einem ersten, oberen Ende (21) und einem zweiten, unteren Ende (29), das in den zweiten Blasenbildungslippen (25) endet, auf dem zweiten Meßniveau (B) befindlich;
   - eine gesteuerte und modulierte Druckgasquelle (40), auf dichte Weise verbunden mit den beiden ersten, oberen Enden (11, 21) der beiden Blasenbildungsrohre (10, 20), und versehen mit Druckdetektionsmitteln (42), um die beiden jeweiligen Blasenbildungsmaximaldrücke ($P_A$, $P_B$) der unterschiedlichen Niveaus (A, B) zu messen; und
   - Rechenmittel (50) für die Dichte der Flüssigkeit auf Grund der beiden festgestellten Blasenbildungsmaximaldrücke ($P_A$, $P_B$);
   dadurch **gekennzeichnet,**
   daß die zweiten, unteren Enden (19, 29) des ersten und zweiten Blasenbildungsrohrs (10, 20) miteinander verbunden sind durch ein Entnahmerohr, das eine einzige Öffnung zur Entnahme von Flüssigkeit enthält, so daß die für die beiden Messungen auf den beiden Niveaus (A, B) verwendete Flüssigkeit dieselbe ist, damit die beiden Messungen unter gleichartigen Bedingungen durchgeführt werden und ohne die Störungen, die durch die eventuellen Rückströmungen der Flüssigkeit verursacht werden.

2. Meßvorrichtung nach Anspruch 1, dadurch gekennzeichnet, daß das Entnahmerohr gebildet wird durch das zweite Blasenbildungsrohr (20), angebracht unter dem ersten Blasenbildungsrohr (10), wobei das zweite, untere Ende (19) des ersten Blasenbildungsrohrs (10) auf dichte Weise verbunden ist mit dem ersten, oberen Ende (21) des zweiten Blasenbildungsrohrs (20), so daß das unter Druck stehende Gas eindringt in das zweite Blasenbildungsrohr (20), nachdem die erste Blasenbildung des ersten Rohrs (10) stattgefunden hat.

3. Meßvorrichtung nach Anspruch 2, dadurch gekennzeichnet, daß ein drittes Blasenbildungsrohr (30) angebracht wird unter dem zweiten Blasenbildungsrohr (20), und auf dichte Weise verbunden wird, durch ein erstes, oberes Ende (31), mit dem zweiten, unteren Ende (29) des zweiten Blasenbildungsrohrs (20), dabei ein zweites, unteres Ende (39) aufweisend, das abschließt mit den dritten Blasenbildungslippen (35), auf einem dritten, mit (C) bezeichneten Niveau befindlich, feststehend bezüglich der beiden ersten Niveaus (A, B), wobei die Blasenbildungsdruck-Detektionsmittel (42) den dritten Blasenbildungsdruck ($P_C$) auf dem dritten Niveau (C) der dritten Blasenbildungslippen (35) feststellen können;
   - Rechenmittel der Höhe ($H_C$) des dritten Niveaus (C) bezüglich der Oberfläche der Flüssigkeit, ausgehend von der Messung des dritten festgestellten Drucks ($P_c$) der dritten Blasenbildungslippen (35) nach der Berechnung der Dichte der Flüssigkeit, um die Dichte des verwendeten Gases zu berechnen, und den von der Dichte der Flüssigkeit erhaltenen Wert zu korrigieren.

4. Meßvorrichtung nach Anspruch 1, wobei die beiden Blasenbildungsrohre (10, 20) parallel sind, aber von unterschiedlicher Länge, dadurch gekennzeichnet, daß das Entnahmerohr (60) aus zwei Anschlüssen (58, 59) besteht, jeder befestigt am unteren Ende (19, 29) von einem der beiden Blasenbildungsrohre (10, 20), die sich vereinigen, um ein gemeinsames Rohr (61) zu bilden, das in der Entnahmeöffnung (57) endet.

5. Meßvorrichtung nach Anspruch 4, dadurch gekennzeichnet, daß sich ein drittes Blasenbildungsrohr (30) unter dem Entnahmerohr (60) befindet, und durch ein erstes, oberes Ende (31) auf dichte Weise verbunden ist mit der Entnahmeöffnung (57) des Entnahmerohrs (60), und ein zweites, unteres Ende (39) enthält, das in dritten Blasenbildungslippen (35) endet, die sich auf einem dritten, festgelegten Niveau (C) befinden, feststehend bezüglich der beiden ersten Niveaus (A, B), wobei die Blasenbildungsdruck-Detektionsmittel (42) den dritten Blasenbildungsdruck ($P_C$) des dritten Niveaus (C) der dritten Blasenbildungslippen (35) feststellen können;
   - Rechenmittel der Höhe ($H_C$) des dritten Niveaus (C) bezüglich der Oberfläche der Flüssigkeit, ausgehend von der Messung des dritten festgestellten Drucks ($P_C$) der dritten Blasenbildungslippen (35), nach der Berechnung der Dichte der Flüssigkeit, um die Dichte des verwendeten Gases zu berechnen, und den erhaltenen Wert der Dichte der Flüssigkeit zu korrigieren.

6. Meßvorrichtung nach den vorhergehenden Ansprüchen, dadurch gekennzeichnet, daß sie Temperaturmeßmittel (46) enthält, angebracht im unteren Ende (19) von wenigstens einem der Blasenbildungsrohre (10).

7. Meßvorrichtung nach Anspruch 3 oder 5, dadurch gekennzeichnet, daß das dritte Blasenbildungsrohr (30) ein Körper mit einer großen Masse ist, um einen Ballast für die Meßvorrichtung zu bilden.

8. Meßvorrichtung nach Anspruch 3, 5 oder 7, dadurch gekennzeichnet, daß ein perforiertes Schutzrohr (36) angebracht ist in der Verlängerung des dritten Blasrohrs (30), um die dritten Lippen (35) des dritten Blasrohrs (30) zu schützen.

9. Meßvorrichtung nach Anspruch 3, 5 oder 7, dadurch gekennzeichnet, daß das dritte Rohr (33) ausreichend lang ist, um die Blasenbildungszone auf Höhe der Lippen (25) zu schützen vor eventuellen Bewegungen der Flüssigkeit um die Meßvorrichtung herum.

## Claims

1. Apparatus for measuring the density and level at a random point of a liquid by differential pressure measurement of the "bubbling" type of at least two tubes (10, 20) at at least two different levels (A, B) of the liquid positioned in known manner with respect to one another and incorporating a first bubbling tube (10) having a first upper end (11) and a second lower end (19) terminated by first bubbling lips (15) positioned at the first measurement level (A), a second bubbling tube (10) having a first upper (21) end and a second lower end (29) terminated by second bubbling lips (25) positioned at the second measurement level (B), a controlled, modulated pressurized gas source (40) tightly connected to the two first upper ends (11, 21) of the two bubbling tubes (10, 20) and provided with pressure detection means (42) for measuring the two respective maximum bubbling pressures ($P_A$, $P_B$) at the two measurement levels (A, B) and means (50) for calculating the density of the liquid on the basis of these two maximum measured bubbling pressures ($P_A$, $P_B$), characterized in that the two lower ends (19, 29) of the first and second bubbling tubes (10, 20) are connected by a sampling tube having a single liquid sampling orifice in such a way that the liquid used for the two measurements at the two measurement levels (A, B) is the same, so that the two measurements are performed under similar conditions and without the disturbances created by possible liquid eddies.

2. Measuring apparatus according to claim 1, characterized in that the sampling tube is constituted by the second bubbling tube (20) placed beneath the first bubbling tube (10), the second lower end (19) of the first bubbling tube (20) being tightly connected to the first upper end (21) of the second bubbling tube (20), so as to make the pressurized gas penetrate the second bubbling tube (20) after the first bubbling operation of the first tube (10) has taken place.

3. Measuring apparatus according to claim 2, characterized in that a third bubbling tube (30) is placed beneath the second bubbling tube (20) and is tightly connected by a first upper end (31) to the second lower end (29) of the second bubbling tube (20) and having a second lower end (29) terminated by third bubbling lips (35) positioned at a third predetermined level (C) fixed with respect to the first two levels (A, B), the bubbling pressure detection means (42) being able to detect the third bubbling pressure ($P_C$) at the third level (C) of the third bubbling lips (35) and means are provided for calculating height ($H_c$) of the third level (C) with respect to the surface of the liquid on the basis of the measurement of the third detected pressure ($P_C$) of the third bubbling lips (35) following the calculation of the liquid density, in order to calculate the density of the gas used and correct the value obtained for the liquid density.

4. Apparatus according to claim 1, the two bubbling rods (10, 20) being parallel, but having different lengths, characterized in that the sampling tube (60) is constituted by two couplings (58, 59), each fixed to the lower end (19, 29) of one of the two bubbling tubes (10, 20) and joined to form a common tube (61) terminated by a sampling orifice (57).

5. Measuring apparatus according to claim 4, characterized in that a third bubbling tube (30) is placed beneath the sampling tube (60) and is tightly connected by a first upper end (31) to the sampling orifice (57) of the sampling tube (60) and having a second lower end (39) terminated by third bubbling lips (35) positioned at a third predetermined level (C) in fixed manner with respect to the first two levels (A, B), the bubbling pressure detection means (42) being able to detect the third bubbling pressure ($P_C$) at the third level (C) of the third bubbling lips (35) and means are provided for calculating the height ($H_C$) of the third level (C) relative to the surface of the liquid on the basis of the measurement of the third detected pressure ($P_C$) of the third bubbling lips (35) after the calculation of the density of the liquid, in order to calculate the density of the gas used and correct the value obtained for the density of the liquid.

6. Measuring apparatus according to the preceding claims, characterized in that it comprises temperature measuring means (46) located in the lower end (19) of at least one of the bubbling tubes (10).

7. Measuring apparatus according to claims 3 or 5, characterized in that the third bubbling tube (30) is a body having a large mass in order to constitute a ballast for the measuring apparatus.

8. Measuring apparatus according to claims 3, 5 or 7, characterized in that a perforated protection tube (36) is placed in the extension of the third bubbling tube (30) in order to protect the third lips (35) of the third bubbling tube (30).

9. Measuring apparatus according to claims 3, 5 or 7, characterized in that the third tube (33) has an adequate length to protect the bubbling zone at the level of the lips (25) against any movements of the liquid around the measuring apparatus.

FIG. 1

EP 0 417 259 B1

FIG. 2

12